# EUROPEAN PATENT APPLICATION

(11) **EP 4 625 307 A1**
(43) Date of publication of application: **01.10.2025**
(21) Application number: 23920138.7
(22) Date of filing: 06.12.2023
(51) Int. Cl.: G06T 3/40, G06T 5/00, G06N 3/0464, G06N 3/045

(54) **ELECTRONIC DEVICE AND IMAGE-PROCESSING METHOD THEREFOR**

(30) Priority: 01.02.2023 KR 20230013786
(71) Applicant: Samsung Electronics Co., Ltd., Suwon-si, Gyeonggi-do 16677 (KR)
(72) Inventor: KIM, Sanghun, Suwon-si Gyeonggi-do 16677 (KR); HAN, Sunbum, Suwon-si Gyeonggi-do 16677 (KR)
(74) Representative: Gulde & Partner
(86) International application number: PCT/KR2023/019991
(87) International publication number: WO 2024/162589

(57) **Abstract**

An electronic device is disclosed. The electronic device comprises: a memory for storing at least one instruction; and one or more processors connected to the memory to control the electronic device, based on receiving an input image, identify an image-processing domain corresponding to an image quality processing network; identify, based on the identified image-processing domain, a unit calculation module for each of a plurality of layers in the image quality processing network; implement a floating-type image quality processing network by controlling first layer information to be input into the identified unit calculation module corresponding to a first layer among the plurality of layers, and inputting an output of the first layer into the identified unit calculation module corresponding to a second layer among the plurality of layers; and process the input image using the implemented floating-type image quality processing network, and wherein each of the plurality of image-processing domains corresponds to a different image resolution.

## Description

### [Technical Field]

The present disclosure relates to an electronic device and an image-processing method therefor, and more particularly, to an electronic device for performing image processing and an image-processing method therefor.

### [Background Art]

In accordance with the advancement of electronic technology, various types of electronic devices are being developed and distributed. In particular, electronic devices used in various places such as homes, offices, and public places have been continuously developing in recent years.

Recently, demand for a high-resolution image service has increased significantly. Due to this demand, deep learning-based technologies such as super-resolution processing and style transfer processing are being used in image processing. For example, super-resolution processing refers to a technology for restoring a low-resolution input image to a high-resolution image through a series of media processes. For example, the low-resolution input image may be restored to the high-resolution image by scaling the low-resolution input image in horizontal/vertical directions using a convolutional neural network (CNN) model including a plurality of layers based on deep learning.

### [Solution to Problem]

According to an embodiment of the present disclosure, provided is an electronic device including: a memory storing at least one instruction; and at least one processor connected to the memory and configured to control the electronic device, wherein the at least one processor is configured to identify an image-processing domain corresponding to an image quality processing network required for image quality processing of an input image from among a plurality of image-processing domains if the input image is received, identify at least one unit calculation module to be used for each of a plurality of layers included in the image quality processing network from among the plurality of unit calculation modules, based on the identified image-processing domain, implement a floating-type image quality processing network by controlling first layer information to be input into at least one unit calculation module corresponding to a first layer among the plurality of layers and output of the first layer to be input into at least one unit calculation module corresponding to a second layer among the plurality of layers, and process the input image by using the implemented image quality processing network. Here, the plurality of image-processing domains may be the image-processing domains for processing images having different resolutions.

The plurality of unit calculation modules may be included in a calculation module including different types of operators for convolution calculation, the electronic device may include a convolution bank in which the plurality of unit calculation modules to be used for each layer are collected based on a domain position in at least one image quality processing network. The at least one processor may be configured to implement the floating-type image quality processing network by identifying the at least one unit calculation module to be used for each of the plurality of layers included in the image quality processing network from among the plurality of unit calculation modules included in the convolution bank.

The at least one processor may be configured to identify at least one first unit calculation module to be used for each of the plurality of layers corresponding to the image quality processing network having a first resolution from among the plurality of unit calculation modules included in the convolution bank based on scheduling information if the image quality processing network is identified as being positioned in a first domain corresponding to the first resolution based on the input image, and identify at least one second unit calculation module to be used for each of the plurality of layers corresponding to the image quality processing network having a second resolution from among the plurality of unit calculation modules included in the convolution bank based on the scheduling information if the image quality processing network is identified as being positioned in a second domain corresponding to the second resolution based on the input image.

The memory may store scheduling information in which the plurality of unit calculation modules to be used for each layer of the image-processing domain are scheduled. The at least one processor may be configured to implement the floating-type image quality processing network by identifying the at least one unit calculation module to be used for each of the plurality of layers included in the image quality processing network based on the scheduling information stored in the memory if the image-processing domain corresponding to the image quality processing network is identified.

The at least one processor may be configured to identify the image-processing domain corresponding to the image quality processing network from among the plurality of image-processing domains based on at least one of resolution information or characteristic information of the input image.

The plurality of layers included in the image quality processing network may include a head layer, a core layer, and a tail layer, the image quality processing network may include a first head layer, a first core layer, and a first tail layer if the image quality processing network is positioned in a first domain. The image quality processing network may include a second head layer, a second core layer, and a second tail layer if the image quality processing network is positioned in a second domain. Here, the first head layer and the first tail layer may be layers trained to correspond to the first domain, and the second head layer and the second tail layer may be layers trained to correspond to the second domain. In addition, the first core layer and the second core layer may be common layers trained to be commonly used in the first domain and the second domain.

The image quality processing network may be configured to perform input shuffling in front of the head layer and output shuffling behind the tail layer, the resolution of an image may be reduced and the number of channels may be increased by performing the input shuffling, and the resolution of an image may be increased and the number of channels may be reduced by performing the output shuffling.

The image quality network may be configured to perform the input shuffling at least one time to enable image data input into the core layer to have a predetermined first resolution pre-trained by the core layer, and perform the output shuffling at least one time to enable image data output from the image quality processing network to have a predetermined second resolution. Here, the predetermined first resolution and the predetermined second resolution may be the same or different based on a type of the image quality processing network.

The at least one processor may be configured to apply network pruning to at least some core layers among the plurality of core layers included in the image quality network, and maintain an amount of convolution calculations based on the domain position in the image quality network by assigning calculations removed by the network pruning to at least one of the head layer or the tail layer.

The image quality processing network may include at least one of a super-resolution processing network, a sharpness processing network, a texture processing network, or an edge processing network.

According to an embodiment of the present disclosure, provided is an image-processing method for an electronic device, the method including: identifying an image-processing domain corresponding to an image quality processing network required for image quality processing of an input image from among a plurality of image-processing domains if the input image is received; identifying at least one unit calculation module to be used for each of a plurality of layers included in the image quality processing network from among the plurality of unit calculation modules, based on the identified image-processing domain; implementing a floating-type image quality processing network by controlling first layer information to be input into at least one unit calculation module corresponding to a first layer among the plurality of layers and output of the first layer to be input into at least one unit calculation module corresponding to a second layer among the plurality of layers; and processing the input image by using the implemented image quality processing network. Here, the plurality of image-processing domains may be the image-processing domains for processing images having different resolutions.

According to an embodiment of the present disclosure, provided is a non-transitory computer-readable medium storing a computer instruction that causes an electronic device to perform an operation if executed by a processor of the electronic device, wherein the operation includes identifying an image-processing domain corresponding to an image quality processing network required for image quality processing of an input image from among a plurality of image-processing domains if the input image is received, identifying at least one unit calculation module to be used for each of a plurality of layers included in the image quality processing network from among the plurality of unit calculation modules, based on the identified image-processing domain, implementing a floating-type image quality processing network by controlling first layer information to be input into at least one unit calculation module corresponding to a first layer among the plurality of layers and output of the first layer to be input into at least one unit calculation module corresponding to a second layer among the plurality of layers, and processing the input image by using the implemented image quality processing network. Here, the plurality of image-processing domains may be the image-processing domains for processing images having different resolutions.

### [Brief Description of Drawings]

FIGS. 1A, 1B, and 1C are diagrams for describing implementation examples of an electronic device according to an embodiment;
FIG. 2A is a block diagram showing a configuration of the electronic device according to an embodiment;
FIG. 2B is a detailed block diagram showing the configuration of the electronic device according to an embodiment;
FIG. 3 is a flowchart for describing an image-processing method for an electronic device according to an embodiment;
FIGS. 4A and 4B are diagrams for describing implementation examples of a unit calculation module according to an embodiment;
FIG. 5 is a diagram for describing an implementation example of a convolution bank according to an embodiment;
FIG. 6 is a flowchart for describing the image-processing method for an electronic device according to an embodiment;
FIGS. 7A, 7B, and 7C are diagrams for describing scheduling information according to an embodiment;
FIGS. 8A and 8B are diagrams for describing implementation examples of a floating-type image quality network according to an embodiment;
FIG. 9 is a diagram for describing an example for implementing different floating-type image quality networks based on a domain according to an embodiment;
FIG. 10 is a diagram for describing an implementation example of an image quality processing network according to an embodiment; and
FIGS. 11A and 11B are diagrams for describing a shuffling method according to an embodiment.

### [Mode for the Invention]

Hereinafter, the present disclosure is described in detail with reference to the accompanying drawings.

Terms used in the specification are briefly described, and the present disclosure is then described in detail.

General terms that are currently widely used are selected as terms used in embodiments of the present disclosure in consideration of their functions in the present disclosure, and may be changed based on the intention of those skilled in the art or a judicial precedent, the emergence of a new technique, or the like. **In** addition, in a specific case, terms arbitrarily chosen by an applicant may exist. **In** this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the present disclosure, an expression "have," "may have," "include," "may include," or the like, indicates existence of a corresponding feature (for example, a numerical value, a function, an operation or a component such as a part), and does not exclude existence of an additional feature.

As used herein, the expressions "at least one of a, b or c" and "at least one of a, b and c" indicate "only a," "only b," "only c," "both a and b," "both a and c," "both b and c," and "all of a, b, and c."

Expressions "first," "second" and the like, used in the present disclosure may indicate various components regardless of the sequence or importance of the components. The expression is used only to distinguish one component from another component, and does not limit the corresponding component.

In case that any component (for example, a first component) is mentioned to be "(operatively or communicatively) coupled with/to" or "connected to" another component (for example, a second component), it should be understood that any component is directly coupled to another component or coupled to another component through still another component (for example, a third component).

A term of a singular number may include its plural number unless explicitly indicated otherwise in the context. It should be understood that a term "include" or "have" used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module and be implemented by at least one processor except for a "module" or a "~er/or" that needs to be implemented by a specific hardware.

Hereinafter, the embodiments of the present disclosure are described in detail with reference to the accompanying drawings.

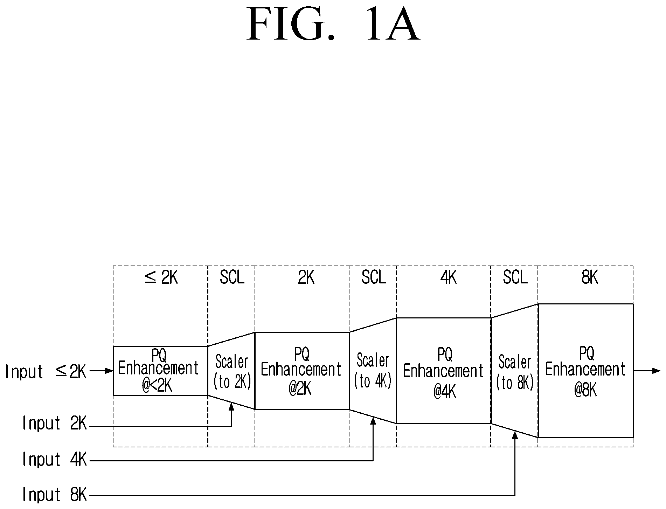

FIGS. 1A to 1C are diagrams for describing implementation examples of an electronic device according to an embodiment of the present disclosure.

An electronic device 100 may be implemented as a television (TV) or a set-top box, but the disclosure is not limited thereto and is applicable to any device having image processing and/or display functions, such as a smartphone, a tablet personal computer (PC), a laptop PC, a head-mounted-device (HMD), a near eye display (NED), a large format display (LFD), a digital signage, a digital information display (DID), a video wall, a projector display, a camera, a camcorder, or a printer.

The electronic device 100 may receive various compressed images or images of various resolutions. For example, the electronic device 100 may receive an image compressed in a form such as moving picture experts group (MPEG, e.g., MP2, MP4, or MP7), joint photographic coding experts group (JPEG), advanced video coding (AVC), H.264, H.265, high efficiency video codec (HEVC), or the like. Alternatively, the electronic device 100 may receive any one image of standard definition (SD), high definition (HD), full HD, ultra HD, or an image having a corresponding resolution or higher.

According to an embodiment, the electronic device 100 may perform image processing on an input image by using an image quality processing network. Here, the image quality processing network may include at least one of a super-resolution processing network, a sharpness processing network, a texture processing network, or an edge processing network, but the disclosure is not limited to. However, for convenience of description, the following description assumes a case where the image quality processing network is implemented as the super-resolution processing network.

FIG. 1A is a diagram for describing a structure of a typical super-resolution processing network.

According to an image quality processing pipeline for a typical 8 kilo (K) display shown in FIG. 1A, different image processing flows may be performed on inputs of various resolutions.

For example, if an image having a resolution lower than or equal to 2K is input, the electronic device 100 may scale the image up to a standardized size of 2K and then perform image quality processing, scale the image up again to a standardized size of 4K, and then perform the image quality processing. The image processing may then be performed in a flow of scaling up the image size to 8K and then performing the image quality processing. On the other hand, if an image having a resolution of 4K is input, image quality processing of 4K may be immediately performed because a previous stage is designed not to process the 4K image. In this case, a specific image quality processing network may be fixed to a specific position to perform the image quality processing, which inevitably causes a structural performance limitation or a decrease in structural efficiency (a degree of image quality improvement per design cost).

For example, the description compares a case where the specific image quality processing network is positioned in perceptual quantizer (PQ) enhancement at 2K (hereinafter referred to as a 2K domain (or zone)) with a case where the specific image quality processing network is positioned in PQ enhancement at 8K (hereinafter referred to as an 8K domain).

If the image quality processing network is positioned in the 2K domain, there may be a structural performance limitation in that image quality improvement through the network is not possible because the 4K or 8K input image does not pass through the network. In addition, even if the image has a resolution lower than or equal to 2K and may pass through the network, the network may only generate data in a frequency domain up to 2K. Therefore, if the image is later scaled up to 8K, there may be a structural performance limitation in that data corresponding to frequencies from 2K to 8K are unable to be generated by the network in the 2K domain.

On the other hand, if the image quality processing network is positioned in the 8K domain, the network may process the input image of all resolutions and generate data up to 8K frequency domain, thus eliminating the structural performance limitation. However, in this case, pixel data that increases by 16 times compared to the 2K domain may be required to be processed. That is, the structural efficiency decrease may occur in which the cost increases by 16 times or the image quality improvement performance is reduced at the same cost. That is, if positioned in a 4K domain, the image quality processing network may have a structural efficiency decrease compared to the 2K domain and a structural performance limitation compared to the 8K domain.

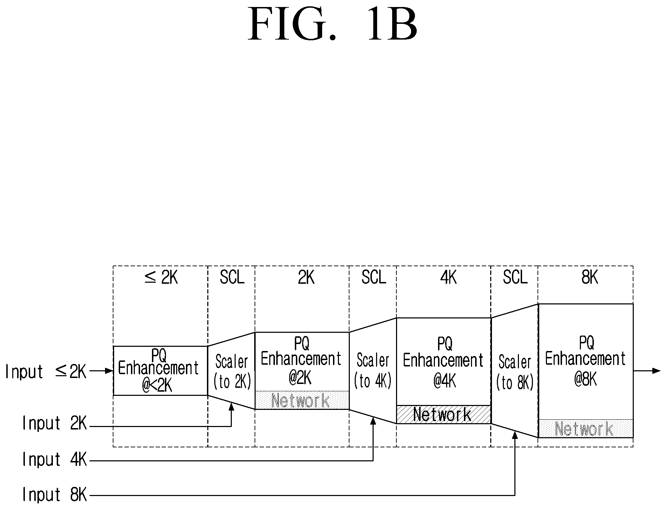

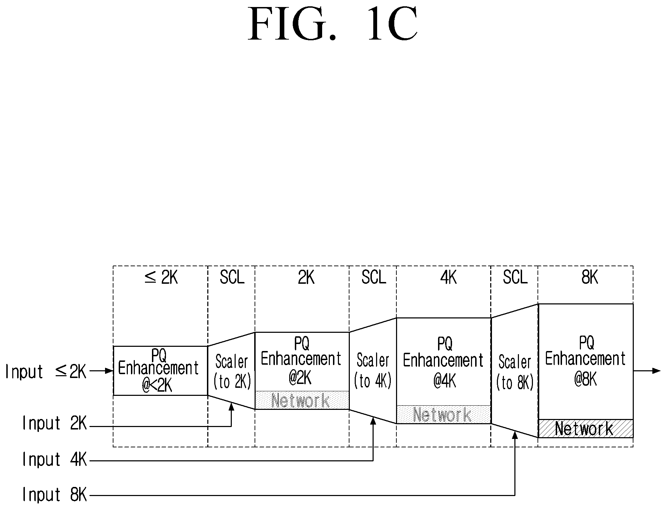

FIGS. 1B and 1C are diagrams for describing a structure of a super-resolution processing network according to an embodiment of the present disclosure.

As shown in FIGS. 1B and 1C, the image quality processing network according to an embodiment may be implemented to be able to move to an optimal image quality processing position based on resolution and/or characteristic of the input image. In this way, the structural performance limitation and the structural efficiency decrease based on the resolution and/or characteristic of the input image may be minimized.

For example, if the 8K image is input as shown in FIG. 1B, the image quality processing network may be positioned in the 8K domain to achieve optimal performance without the structural performance limitation, although the efficiency may be slightly reduced.

In addition, if the 4K image is input, the image quality processing network may be positioned in a different position based on the characteristic of the image. For example, if a high-quality 4K image is analyzed in a frequency domain, there is little room to further improve the image quality in the 4K domain. Therefore, the image quality processing network may be positioned in the 8K domain to generate data in an 8K frequency domain. On the other hand, if a low-quality 4K image is analyzed, there is much room to improve the image quality even in the 4K domain, and it may be important to maximize the efficiency of the image quality processing network (here, a case where a cost of the image quality network is infinitely invested and all images may thus be improved to a desired level in the 8K domain is excluded from consideration). In this case, it may be more efficient to position the network in the 4K domain to generate the high-quality 4K image having improved efficiency than in the 8K domain.

Similarly, if the 2K image is input, rather than positioning the image quality processing network in the 8K domain, which exponentially decreases the efficiency, it may be appropriate to position the image quality processing network in the 4K domain, as shown in FIG. 1C, to maintain appropriate efficiency while minimizing the structural performance limitation. Alternatively, it may be appropriate to position the image quality processing network in the 2K domain to optimize efficiency.

Accordingly, the following description describes various embodiments that provide a floating-type network capable of operating the image quality processing network at an optimal position in real time based on the resolution and/or characteristic of the input image.

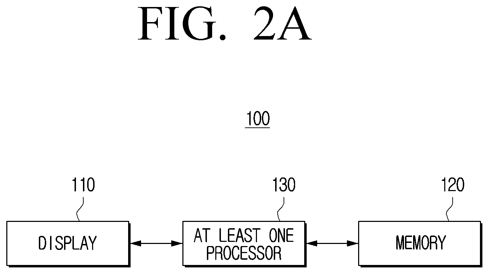

FIG. 2A is a block diagram showing a configuration of the electronic device according to an embodiment

Referring to FIG. 2A, the electronic device 100 includes a display 110, a memory 120, and at least one processor 130.

The display 110 may be implemented as a display including a self-luminous element, or a display including a non-luminous element and a backlight. For example, the display 110 may be implemented as any of various types of displays, such as a liquid crystal display (LCD), an organic light-emitting diode (OLED) display, a light emitting diode (LED) display, a micro-LED display, a mini-LED display, a plasma display panel (PDP), a quantum dot (QD) display, or a quantum dot light-emitting diode (QLED) display. The display 110 may also include a driving circuit, a backlight unit, and the like, which may be implemented in a form such as a-si thin film transistor (TFT), a low temperature poly silicon (LTPS) TFT, or an organic TFT (OTFT). As an example, the display 110 may be implemented as a flat display, a curved display, a foldable or/and rollable flexible display, or the like. However, in some cases, the electronic device 100 may not include the display 110, in which case a final obtained output image may be transmitted to an external device including a display.

The memory 120 may store data required for the various embodiments. The memory 120 may be implemented in the form of a memory embedded in an electronic device 100' or in the form of a memory detachably attached to the electronic device 100, based on a purpose of data storage. For example, data for operating the electronic device 100 may be stored in the memory embedded in the electronic device 100', and data for expanded functions of the electronic device 100 may be stored in the memory detachably attached to the electronic device 100. The memory embedded in the electronic device 100 may be implemented as at least one of a volatile memory (e.g., a dynamic random access memory (DRAM), a static RAM (SRAM), or a synchronous dynamic RAM (SDRAM)) or a non-volatile memory (e.g., an one time programmable read only memory (OTPROM), a programmable ROM (PROM), an erasable and programmable ROM (EPROM), an electrically erasable and programmable ROM (EEPROM), a mask ROM, or a flash ROM), a flash memory (e.g., a NAND flash or a NOR flash), a hard drive, or a solid state drive (SSD)). In addition, the memory detachably attached to the electronic device 100' may be implemented in the form of a memory card (e.g., a compact flash (CF), a secure digital (SD), a micro secure digital (Micro-SD), a mini secure digital (Mini-SD), an extreme digital (xD), or a multi-media card (MMC)), or an external memory which may be connected to a universal serial bus (USB) port (e.g., a USB memory).

As an example, the memory 120 may store information on the image quality processing network. Here, the information on the image quality processing network may be layer configuration information such as features and coefficients. In addition, the memory 120 may store scheduling information for implementing the floating-type network described below.

At least one processor 130 may control overall operations of the electronic device 100. In detail, at least one processor 130 may be connected to each component of the electronic device 100 and control the overall operations of the electronic device 100. For example, at least one processor 130 may be electrically connected to the display 110 and the memory 120 and control the overall operations of the electronic device 100. At least one processor 130 may include one or more processors.

At least one processor 130 may perform the operation of the electronic device 100 according to the various embodiments by executing at least one instruction stored in the memory 120.

An artificial intelligence-related function according to the present disclosure may be operated using the processor and memory of the electronic device.

At least one processor 130 may include one or more processors. Here, one or more processors may include at least one of a central processing unit (CPU), a graphic processing unit (GPU), or a neural processing unit (NPU), and is not limited to the examples of the processors described above.

The CPU is a general-purpose processor which may perform not only general calculations but also artificial intelligence calculations, and may efficiently execute complex programs through a multi-layered cache structure. The CPU may be advantageous for a serial processing method that enables organic linkage between a previous calculation result and a next calculation result through sequential calculation. The general-purpose processor is not limited to the above examples unless specified as the above-mentioned CPU.

The GPU is a processor for large-scale calculations such as floating-point calculations used for graphics processing, and may perform the large-scale calculations in parallel by integrating a large number of cores. In particular, the GPU may be advantageous for a parallel processing method such as convolution calculation compared to the CPU. In addition, the GPU may be used as the co-processor to supplement the function of the CPU. The processor for the large-scale calculations is not limited to the above example unless specified as the above-mentioned GPU.

The NPU is the processor specialized in the artificial intelligence calculation using an artificial neural network, and each layer included in the artificial neural network may be implemented in hardware (e.g., silicon). Here, the NPU is specially designed based on requirements of a company, and may thus have a lower degree of freedom than the CPU or the GPU. However, the NPU may efficiently process the artificial intelligence calculation required by the company. As the processor specialized for the artificial intelligence calculation, the NPU may be implemented in various forms such as a tensor processing unit (TPU), an intelligence processing unit (IPU), or a vision processing unit (VPU). The artificial intelligence processor is not limited to the above example unless specified as the above-mentioned NPU.

In addition, at least one processor 130 may be implemented in a system on chip (SoC). Here, the SoC may further include the memory 120 and a network interface such as a bus for data communication between the processor 130 and the memory 120 in addition to at least one processor 130.

If the system on chip (SoC) included in the electronic device 100 includes the plurality of processors, the electronic device 100 may use some of the plurality of processors to perform the artificial intelligence calculation (e.g., calculation related to the learning or inference of an artificial intelligence model). For example, the electronic device may perform the artificial intelligence calculation by using at least one of the GPU, the NPU, the VPU, the TPU, or a hardware accelerator that is specialized for the artificial intelligence calculation such as convolution calculation and matrix multiplication calculation among the plurality of processors. However, this configuration is only an example, and the electronic device may process the artificial intelligence calculation by using the general-purpose processor such as the CPU.

In addition, the electronic device 100 may perform calculation for the function related to the artificial intelligence by using multi-cores (e.g., dual-core or quad-core) included in one processor. In particular, the electronic device may perform the artificial intelligence calculation such as the convolution calculation and the matrix multiplication calculation in parallel using the multi-cores included in the processor.

At least one processor 130 may perform the control to process the input data based on a predefined operation regulation or the artificial intelligence model, stored in the memory 120. The predefined operation regulation or the artificial intelligence model may be obtained by the learning.

Here, "obtained by the learning" may indicate that the predefined operation regulation or artificial intelligence model of a desired feature is obtained by applying a learning algorithm to a lot of learning data. Such learning may be performed by a device itself in which the artificial intelligence is performed according to the present disclosure, or may be performed by a separate server/system.

The artificial intelligence model may include a plurality of neural network layers. At least one layer has at least one weight value, and calculation of the layer may be performed based on a calculation result of a previous layer and at least one defined calculation. Examples of the neural network may include a convolutional neural network (CNN), a recurrent neural network (RNN), a deep neural network (DNN), a restricted Boltzmann machine (RBM), a deep belief network (DBN), a bidirectional recurrent deep neural network (BRDNN), a deep Q-network, and a transformer. However, the neural network of the present disclosure is not limited to the above examples unless otherwise specified.

The learning algorithm is a method for training a predetermined target device (e.g., robot) by using a large number of learning data for the predetermined target device to make a decision or a prediction for itself. Examples of the learning algorithms may include a supervised learning algorithm, an unsupervised learning algorithm, a semi-supervised learning algorithm, or a reinforcement learning algorithm. However, the learning algorithm of the present disclosure is not limited to the above-described examples unless otherwise specified.

The image quality processing network according to an embodiment may be an implementation example of the artificial intelligence model described above.

Hereinafter, for the convenience of description, at least one processor 130 is referred to as the processor 130.

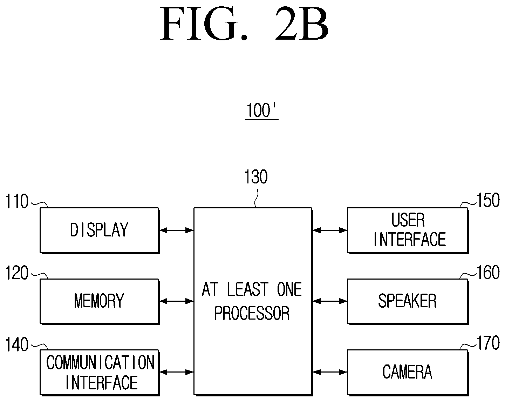

FIG. 2B is a detailed block diagram showing the configuration of the electronic device according to an embodiment.

Referring to FIG. 2B, the electronic device 100' may include the display 110, the memory 120, at least one processor 130, a communication interface 140, a user interface 150, a speaker 160, and a camera 170. The description omits a detailed description of the configuration shown in FIG. 2B that overlaps with the configuration shown in FIG. 2A among the configurations shown in FIG. 2B.

The communication interface 140 may support various communication methods based on an implementation example of the electronic device 100'. For example, the communication interface 140 may communicate with the external device, an external storage medium (e.g., a USB memory), an external server (e.g., cloud servers), or the like by using a communication method such as Bluetooth, access point (AP)-based wireless fidelity (Wi-Fi, wireless local area network (LAN)), Zigbee, wired/wireless local area network (LAN), wide area network (WAN), Ethernet, IEEE 1394, high definition multimedia interface (HDMI), universal serial bus (USB), mobile high-definition link (MHL), audio engineering society/European broadcasting union (AES/EBU) communication, optical communication, or coaxial communication.

The user interface 150 may be implemented as a device such as a button, a touch pad, a mouse or a keyboard, or may be implemented as a touchscreen capable of also performing the display function and manipulation input function described above. According to an embodiment, the user interface 150 may be implemented as a remote control transmitter/receiver to receive a remote control signal. The remote control transmitter/receiver may receive the remote control signal from an external remote control device or transmit the remote control signal through at least one of infrared communication, Bluetooth communication, or Wi-Fi communication.

The speaker 160 may output an audio signal. For example, the speaker 160 may convert a digital audio signal processed by the processor 130 into an analog audio signal, amplify the converted signal, and output the amplified signal.

The camera 170 may be turned on based on a predetermined event and capture an image. The camera 170 may convert the captured image into an electrical signal and generate image data based on the converted signal.

In addition, the electronic device 100' may include a microphone, a sensor, a tuner, and a demodulator according to an implementation example.

The microphone is a component for receiving a user voice or another sound and converting the same into audio data. However, according to another embodiment, the electronic device 100' may receive the user voice input from the external device through the communication interface 140.

The sensor may include any of various types of sensors such as a touch sensor, a proximity sensor, an acceleration sensor, a geomagnetic sensor, a gyro sensor, a pressure sensor, a position sensor, or an illuminance sensor.

The tuner may receive a radio frequency (RF) broadcast signal by being tuned to a channel selected by a user or all pre-stored channels among the RF broadcast signals received through an antenna.

The demodulator may receive and demodulate a digital intermediate frequency (IF) signal (DIF) converted using the tuner, and may also perform channel decoding, or the like.

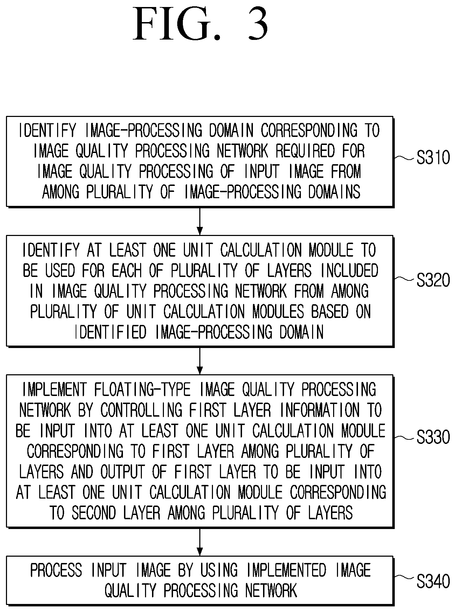

FIG. 3 is a flowchart for describing an image-processing method for an electronic device according to an embodiment.

According to an embodiment shown in FIG. 3, the processor 130 may identify an image-processing domain corresponding to the image quality processing network required for the image quality processing of the input image from among the plurality of image-processing domains (S310). As an example, the image quality processing network may be implemented as a convolutional neural network (CNN). The plurality of image-processing domains may be the image-processing domains for processing images having different resolutions. For example, the plurality of image-processing domains may include the 2K domain, the 4K domain, and the 8K domain. However, some domains may be omitted or added based on a product specification, and the present disclosure is not necessarily limited thereto.

As an example, the processor 130 may identify the domain corresponding to the image quality processing network based on resolution information and/or characteristic information of the input image. The resolution information of the input image refers to information indicating the resolution such as 2K, 4K, or 8K, and the characteristic information may be obtained by analyzing the input image (e.g., analysis through preprocessing) based on noise-related information, edge-related information, texture-related information, contrast-related information, or the like that may indicate the image quality information (e.g., high image quality or low image quality) of the input image, or received together with the input image (e.g., in the form of metadata).

The image quality processing network may include at least one of the super-resolution processing network, the sharpness processing network, the texture processing network, or the edge processing network. However, for the convenience of description, the following description mainly describes an embodiment in which the image quality processing network is implemented as the super-resolution processing network. An operation for identifying the domain corresponding to the image quality processing network refers to an operation for identifying one of the plurality of image-processing domains (e.g., 2K domain, 4K domain, or 8K domain), and as shown in FIGS. 1B and 1C, the plurality of image-processing domains may be used to indicate an operation identical/similar to identifying a domain position if the domains are positioned in a sequential order.

Next, the processor 130 may identify at least one unit calculation module to be used for each of the plurality of layers included in the image quality processing network from among the plurality of unit calculation modules, based on the image-processing domain identified in operation S310 (S320). As an example, a structure of the image quality processing network may differ depending on which domain among the plurality of image-processing domains the image quality processing network is positioned in. In this case, the configuration, number, connection relationship, or the like of the calculation module corresponding to each layer may differ depending on a different structure of the image quality processing network, thus requiring an operation for identifying at least one unit calculation module to be used for each of the plurality of layers.

Next, the processor 130 may implement the floating-type image quality processing network by controlling first layer information to be input into at least one unit calculation module corresponding to a first layer among the plurality of layers and output of the first layer to be input into at least one unit calculation module corresponding to a second layer among the plurality of layers, based on at least one calculation module in operation S320 (S330). Here, layer information may be the layer configuration information such as the features and the coefficients.

Next, the processor 130 may process the input image by using the implemented floating-type image quality processing network (S340).

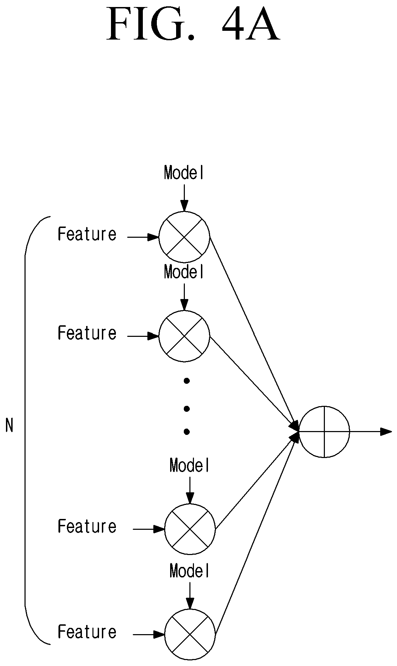

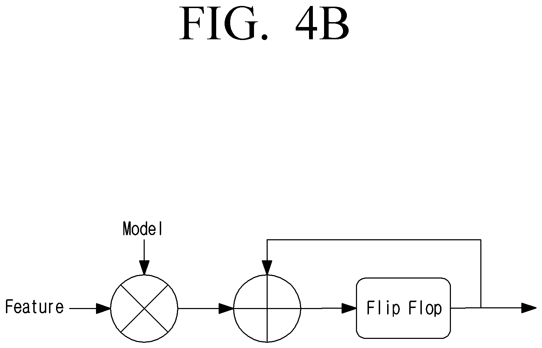

FIGS. 4A and 4B are diagrams for describing implementation examples of the unit calculation module according to an embodiment.

According to an embodiment, the unit calculation module (or a basic calculation module) may include different types of hardware operators for the convolution calculation. Here, the different types of operators may include multipliers, adders, flip-flops, or the like, but the disclosure is not necessarily limited thereto.

As an example, the unit calculation module may be implemented as a tree structure including the multiplier and the adder as shown in FIG. 4A or, as a part of the tree structure. For example, in the structure shown in FIG. 4A, the number of multipliers N may be determined based on a filter size. For example, in a 3x3 convolution, the number N of multipliers may be 9.

According to another example, the unit calculation module may be implemented as a multiply-accumulate (MAC) structure including the multiplier, the adder, and the flip-flop as shown in FIG. 4B.

According to an embodiment, the electronic device 100 may include a convolution bank in which the plurality of unit calculation modules to be used for each layer are collected based on the domain position in at least one image quality processing network.

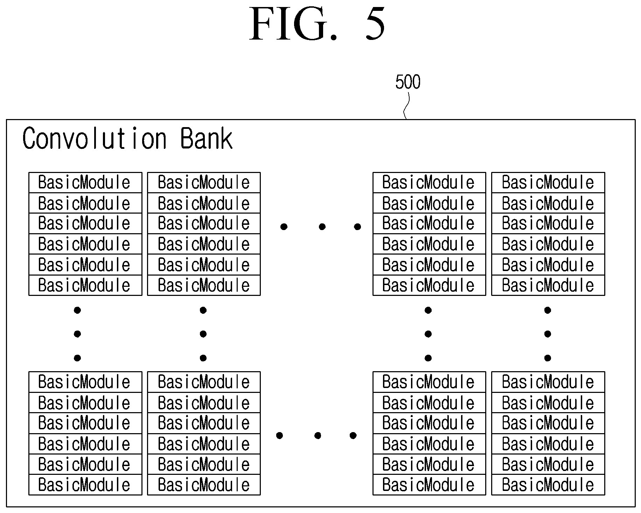

FIG. 5 is a diagram for describing an implementation example of the convolution bank according to an embodiment.

According to an example, as shown in FIG. 5, a convolution bank 500 may include the unit calculation modules, i.e., the basic modules, each having the structure as shown in FIGS. 4A and 4B, which are collected as many as necessary to configure the image quality processing network required for the electronic device 100. For example, if the image quality processing network required for the electronic device 100 is the super-resolution processing network, the convolution bank 500 may include the collected basic modules necessary to configure the super-resolution processing network corresponding to each image-processing domain. For example, unlike a conventional system where hardware corresponding to each layer of the image quality processing network is not designed in advance, the maximum number of multipliers and adders expected for the image processing network may be predicted in advance and implemented as the plurality of unit operation modules, and the necessary unit operation modules may be selected in real time to thus implement the floating-type image quality processing network.

If the image quality processing networks required for the electronic device 100 is a plurality of different types of networks, the convolution bank may include the basic modules required to configure the plurality of image quality processing networks, which are collected for each image-processing domain. In this case, the convolution bank may be implemented as a single convolution bank in which all the basic modules required for each of the plurality of image quality processing networks are collected, or as a plurality of convolution banks in each of which the basic modules are collected for each of the plurality of image quality processing networks.

However, for the convenience of explanation, the following description assumes a case where the convolution bank is implemented as a collection of the basic modules for implementing one image quality processing network for each image-processing domain.

According to an embodiment, the processor 130 may implement (or configure) the floating-type image quality processing network corresponding to the image-processing domain by identifying at least one unit calculation module to be used for each of the plurality of layers based on the image-processing domain corresponding to the input image from among the plurality of unit calculation modules included in the convolution bank 500. For example, even if a network having the same hardware cost is positioned in a different image-processing domain, a different structure may be required for each position and designed using different hardware appropriate for the different structure. To this end, all hardware operators such as the multiplier and the adder for performing convolution used in all networks based on the convolutional neural network (CNN) may be collected and positioned as the convolution bank 500. Here, all the CNN-based networks may include the image quality processing network required for the electronic device 100 according to an implementation example of the electronic device 100. However, the present disclosure is not limited thereto, and all the CNN-based networks may also include the image quality processing network that may be required for future updates of the electronic device 100 or the like.

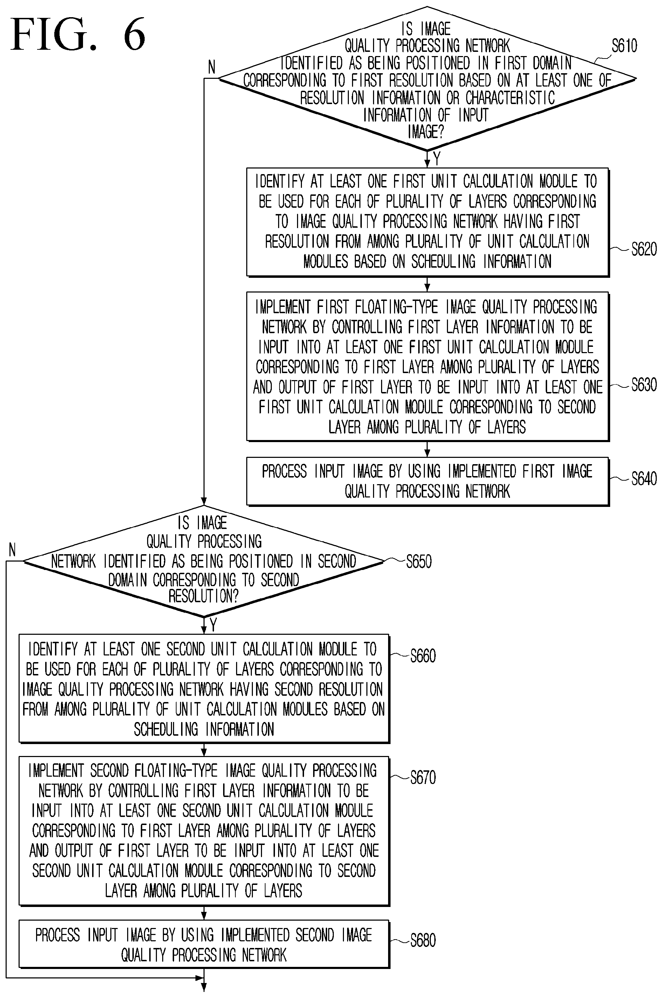

$FIG. 6 is a flowchart for describing an image-processing method for an electronic device according to an embodiment.

According to an embodiment shown in FIG. 6, the processor 130 may identify at least one first unit calculation module to be used for each of the plurality of layers corresponding to the image quality processing network having a first resolution from among the plurality of unit calculation modules included in the convolution bank 500 based on the scheduling information (S620) if the image quality processing network is identified as being positioned in a first domain corresponding to the first resolution based on at least one of the resolution information or characteristic information of the input image (S610). Here, the scheduling information may be information indicating that the plurality of unit calculation modules to be used for each layer are scheduled based on the image-processing domain. That is, the scheduling information may include information such as identification information, input/output information, input/output order, or the like of the plurality of unit calculation modules to be used for each layer based on the image-processing domain. As an example, the scheduling information may be stored in the memory 120, and is not limited thereto. For example, the scheduling information may be obtained by hardware-wise selecting (or controlling) a multiplexer (Mux), if the domain position in the image quality processing network is identified based on the input image. For example, the processor 130 may obtain the scheduling information in real time by selecting whether the layer information is to be input into the corresponding basic module by using the Mux based on the domain position, and by selecting which layer the output of the basic modules is to be connected to.

Next, the processor 130 may implement a first floating-type image quality processing network by controlling the first layer information to be input into at least one first unit calculation module corresponding to the first layer among the plurality of layers and the output of the first layer to be input into at least one first unit calculation module corresponding to the second layer among the plurality of layers, based on the scheduling information (S630).

Next, the processor 130 may process the input image by using the first floating-type image quality processing network implemented based on the scheduling information (S640). For example, the processor 130 may control the image quality processing to be performed by inputting the input image into the first floating-type image quality processing network.

**In** addition, the processor 130 may identify at least one second unit calculation module to be used for each of the plurality of layers corresponding to the image quality processing network having a second resolution from among the plurality of unit calculation modules included in the convolution bank 500 based on the scheduling information (S660) if the image quality processing network is identified as being positioned in a second domain corresponding to the second resolution based on at least one of the resolution information or characteristic information of the input image (S650-Y).

Next, the processor 130 may implement a second floating-type image quality processing network by controlling the first layer information to be input into at least one second unit calculation module corresponding to the first layer among the plurality of layers and the output of the first layer to be input into at least one second unit calculation module corresponding to the second layer among the plurality of layers, based on the scheduling information (S670).

Next, the processor 130 may process the input image by using the second floating-type image quality processing network implemented based on the scheduling information (S680).

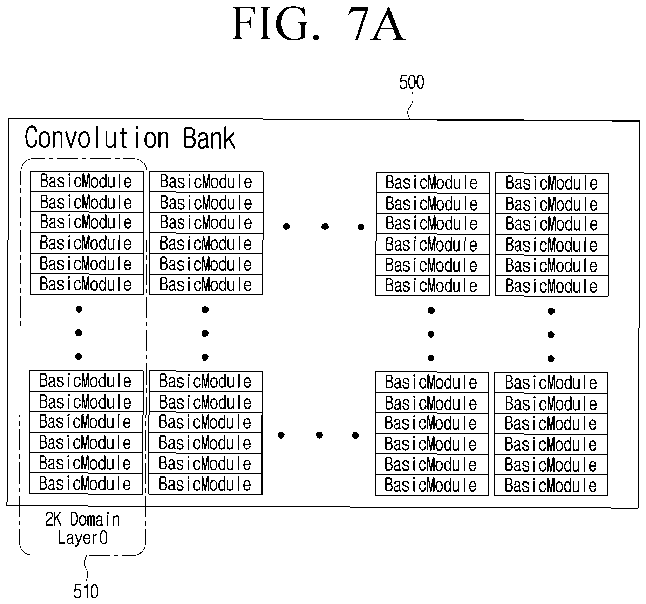

FIGS. 7A to 7C are diagrams for describing the scheduling information according to an embodiment.

According to an embodiment, the floating-type network required in real time may be implemented by using the scheduling information that pre-schedules the unit calculation modules to be used for each layer based on the domain in which the image quality processing network is positioned.

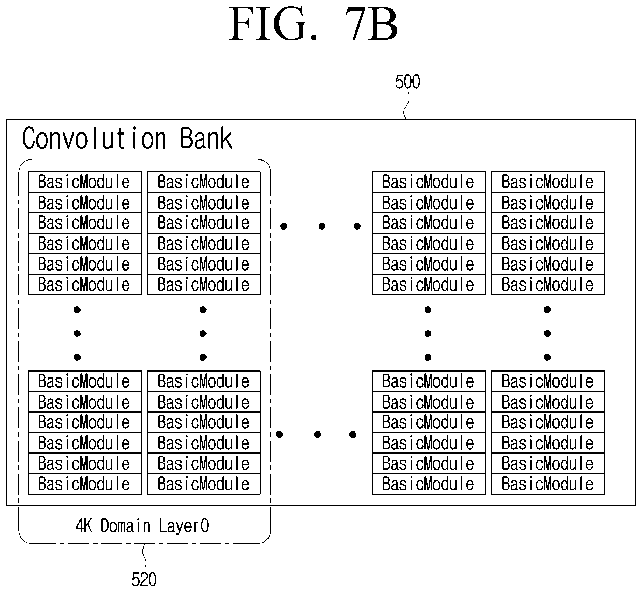

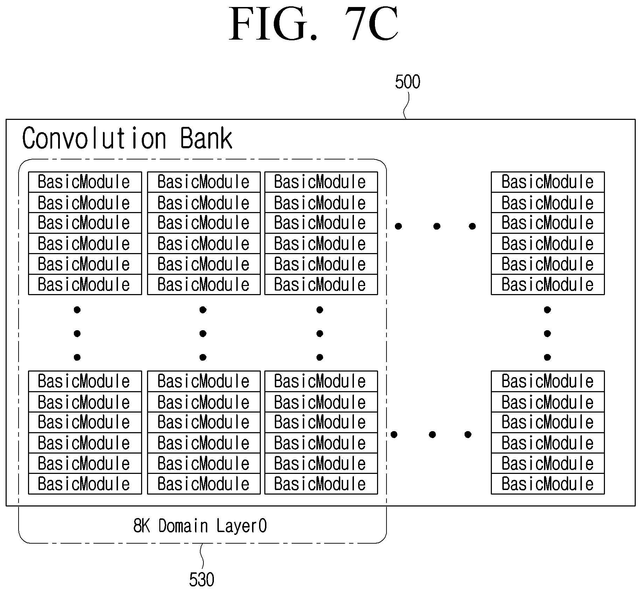

As an example, as shown in FIGS. 7A to 7C, which basic modules are to be used for Layer0 in each domain may be pre-scheduled based on the domain in which the image quality processing network is positioned. For example, as shown in FIG. 7A, among the basic modules included in the convolution bank 500, basic modules 510 to be used for Layer0 in the 2K domain may be pre-scheduled. In addition, as shown in FIG. 7B, among the basic modules included in the convolution bank 500, basic modules 520 to be used for Layer0 in the 4K domain may be pre-scheduled. In addition, as shown in FIG. 7C, among the basic modules included in the convolution bank 500, basic modules 530 to be used for Layer0 in the 8K domain may be pre-scheduled.

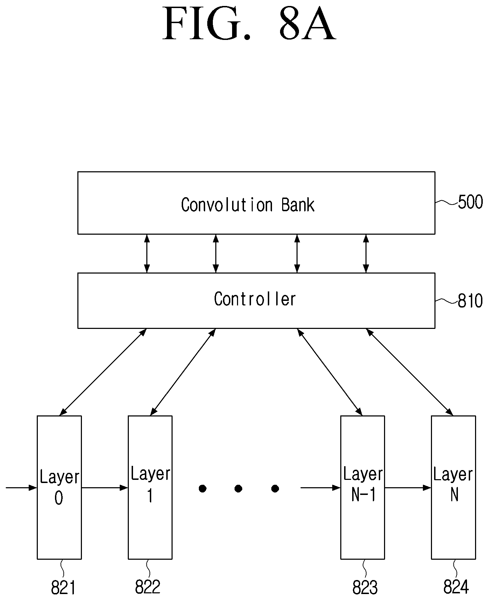

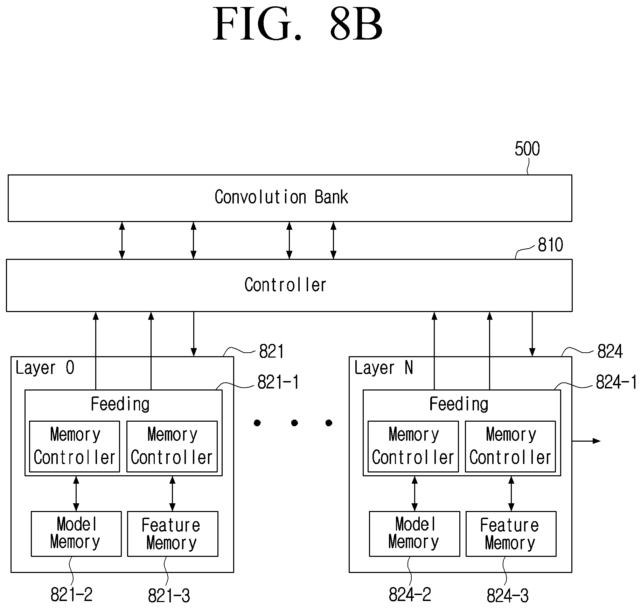

FIGS. 8A and 8B are diagrams for describing implementation examples of the floating-type image quality network according to an embodiment.

According to an embodiment, each layer 821, 822, 823, 824, or the like may perform network calculations in conjunction with a controller 810 and the convolution bank 500 as shown in FIG. 8A. Here, the controller 810 may be an implementation example of the processor 130 described above.

As an example, the controller 810 may select which layer information to input into each of at least some basic modules in the convolution bank 500 based on the domain in which the image quality processing network is positioned, based on the scheduling information, and may select which layer the output of each basic module is to be input into. That is, in the latter case, the controller 810 may select which basic module of which layer the output of each basic module is to be input into. Here, the layer information may be the layer configuration information such as the features and the coefficients.

According to an embodiment, each layer 821, 822, 823, 824, or the like may include a feeding module, a model memory, and a feature memory, as shown in FIG. 8B. For example, Layer0 821 may include a first feeding module 821-1, a first model memory 821-2, and a first feature memory 821-3. In addition, LayerN 824 may include an Nth feeding module 824-1, an Nth model memory 824-2, and an Nth feature memory 824-3. The operations in the respective layers are identical/similar to each other, and the description thus describes Layer0 821 as an example.

As an example, the first feeding module 821-1 may access the first model memory 821-2 by using a memory controller to thus obtain model information stored in the first model memory 821-2. In addition, the first feeding module 821-1 may access the first feature memory 821-3 by using the memory controller to thus obtain feature information stored in the first feature memory 821-3. Here, the separate memory controllers that access the first model memory 821-2 and the first feature memory 821-3 are shown as being implemented, the present disclosure is not necessarily limited thereto, and the first model memory 821-2 and the first feature memory 821-3 may be accessed using the same memory controller. For example, the model information may include filter coefficient information for convolution, and the feature information may include feature information of a feature map that is an output of a previous convolution or a first input.

As an example, the controller 810 may provide the model information and the feature information to the convolution bank 500 by using the first feeding module 821-1, receive an output of the convolution calculation provided from the convolution bank 500, process the received output, pass the processed output to a next layer, and by repeating this process, implement the floating-type image quality processing network corresponding to a specific domain.

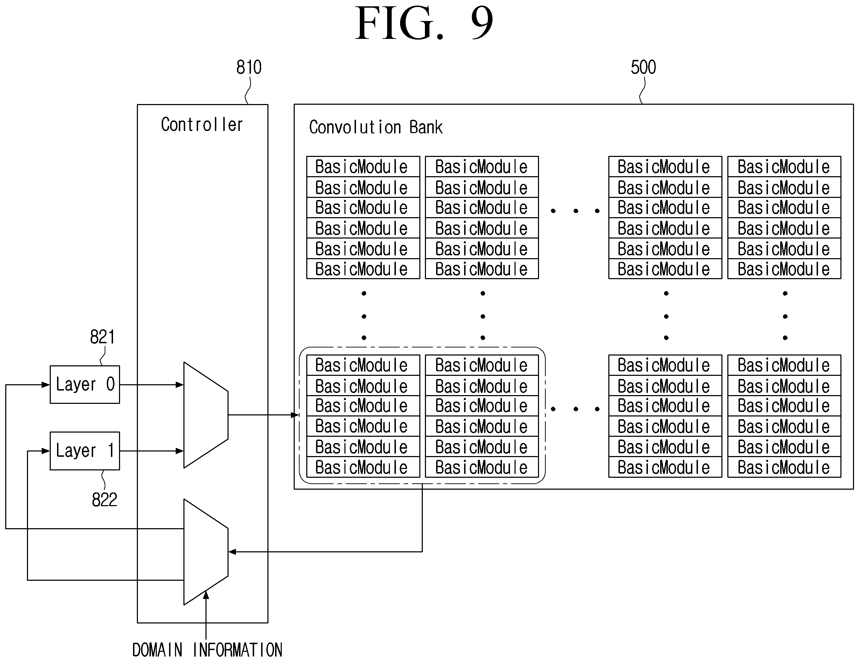

FIG. 9 is a diagram for describing an example for implementing different floating-type image quality networks based on the domain according to an embodiment.

According to an embodiment, as shown in FIG. 9, if some application-specific integrated circuit (ASIC) modules in the convolution bank 500 are switched to Layer0 or Layer1 based on the domain, the controller 810 may be implemented to select the information (e.g., the model information and the feature information) to be input into the corresponding basic modules based on the domain information, and to select which layer the output of the basic modules is connected to. For example, the controller 810 may be implemented to input the layer information into the corresponding basic modules by using the Mux based on the domain information, and to select which layer the output of the basic modules is to be connected to.

According to an example, an activation function or a bias value that may be added to the convolution output may be positioned appropriately for a situation in at least one of the controller 810 or each layer 821, 822, 823, 824, or the like.

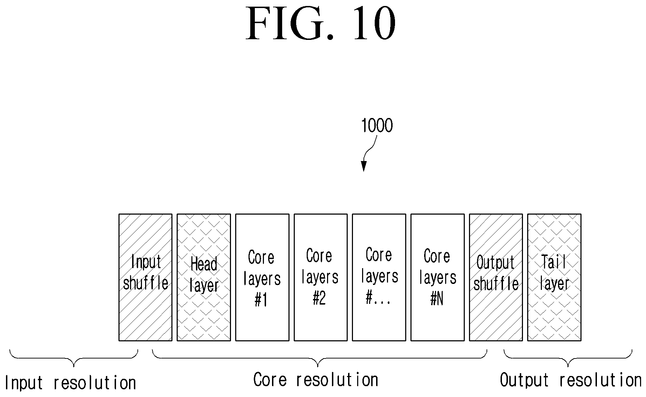

FIG. 10 is a diagram for describing an implementation example of the image quality processing network according to an embodiment.

According to an embodiment, an image quality processing network 1000 may include a plurality of layers as shown in FIG. 10, and the plurality of layers may include a head layer, a core layer, and a tail layer. According to an example, the image quality processing network may be implemented to include a first head layer, a first core layer, and a first tail layer if the image quality processing network is positioned in the first domain, and the image quality processing network may be implemented to include a second head layer, a second core layer, and a second tail layer if the image quality processing network is positioned in the second domain. **In** this case, the first head layer and the first tail layer may be layers trained to correspond to the first domain, and the second head layer and the second tail layer may be layers trained to correspond to the second domain. **In** addition, the first core layer and the second core layer may be common layers trained to be commonly used in the first domain and the second domain.

For example, if the image quality processing network is trained individually for each domain position, the cost and time required for the training may increase significantly. Accordingly, a training network may be classified into wrappers (i.e., the head layer and the tail layer) and the core layer, and only the head layer and tail layer may be retrained for each domain position. In this case, not only may the training cost, personnel, and time be reduced, but structural changes in the image quality processing network may also be minimized even in different domain positions, thus making it easier to maintain consistency in the image quality.

In order to retrain only the head layer and the tail layer based on each domain position, the image quality processing network may be implemented to perform input shuffling in front of the head layer and output shuffling behind the tail layer.

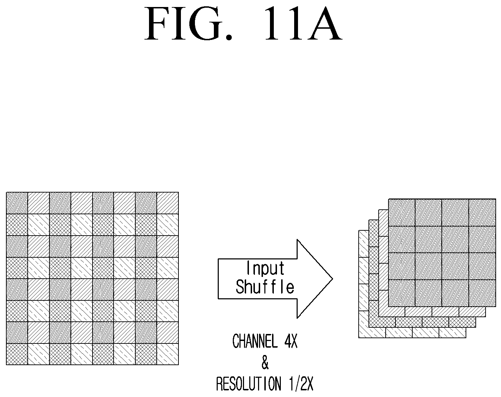

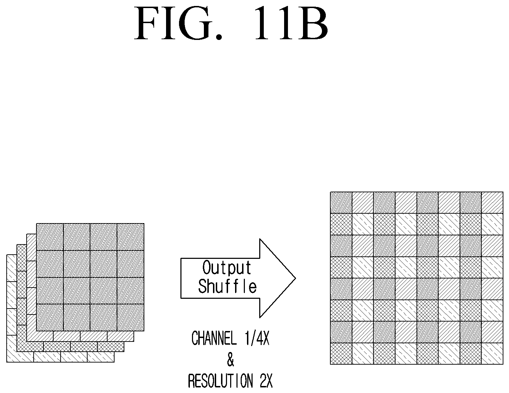

FIGS. 11A and 11B are diagrams for describing a shuffling method according to an embodiment.

According to an embodiment, the image quality processing network 1000 may be implemented to reduce the resolution of an image and increase the number of channels by performing the input shuffling, and to increase the resolution of an image and reduce the number of channels by performing the output shuffling. Here, unlike a general convolutional layer, the shuffling may have a function of changing only the order and shape of data without calculation.

As an example, as shown in FIG. 11A, the input shuffling may be performed to increase the number of channels by a factor of four and to reduce the resolution to one half. In addition, as shown in FIG. 11B, the output shuffling may be performed to reduce the number of channels to one fourth and increase the resolution by a factor of two. However, this configuration is only an example, and the input shuffling and the output shuffling are not necessarily performed in the forms shown in FIGS. 11A and 11B.

According to an embodiment, the image quality processing network may perform the input shuffling at least one time to enable image data input into the core layer to have the predetermined first resolution pre-trained by the core layer, and perform the output shuffling at least one time to enable image data output from the image quality processing network to have the predetermined second resolution. Here, the predetermined first resolution and the predetermined second resolution may be the same or different based on a type of image quality processing network.

As an example, if the input shuffling and the output shuffling are exactly implemented as shown in FIGS. 11A and 11B, the resolution may be reduced to core resolution by appropriately repeating the input shuffling for various input resolutions. For example, if input resolution is 8K and the core resolution is full high definition (FHD), 16-channel core resolution data may be obtained by repeating the input shuffling twice. Next, 8K data, which is the output resolution, may be obtained if the output shuffling is repeated twice for the data passing through the core layer. Accordingly, a core structure in which the core resolution is maintained regardless of the input resolution may be implemented.

The input shuffling and output shuffling described above may be used to maintain the core structure and retrain only the head layer and the tail layer based on the domain position in the network. In this case, the resolution and characteristics of the image may be reflected in the head layer and the tail layer, and the core layer may contribute to a desired image quality improvement (e.g., texture generation, edge thinning, or sharpening increase).

According to an embodiment, the processor 130 may apply network pruning to at least some core layers among the plurality of core layers included in the image quality network. In this case, the processor 130 may maintain an amount of convolution calculations (or the number of calculations) based on the domain position in the image quality network by assigning calculations removed by the network pruning to at least one of the head layer or the tail layer. Here, the network pruning indicates removing unimportant weights from the artificial neural network to make the neural network in the corresponding part lightweight. That is, to maintain a total amount (or cost) of convolution calculations, the network pruning technique may be applied to the core layer to reduce the weights of the convolution layers having relatively less influence (for example, the least influence) and assign the same to at least one of the head layer or the tail layer.

According to the various embodiments described above, one image quality processing network may operate in real time at the optimal domain position based on the resolution, characteristics, or the like of the input image, thereby resolving the structural performance limitation and the efficiency reduction. In addition, the time required for the training may be minimized by classifying the layers included in the network into the core layer and wrapper layers, and then by training only the wrapper layers.

The methods according to the various embodiments of the present disclosure described above may be implemented in the form of an application which may be installed on an existing electronic device.

In addition, the methods according to the various embodiments of the present disclosure described above may be implemented only by software upgrade or hardware upgrade of the existing display device.

In addition, the various embodiments of the present disclosure described above may be performed using an embedded server included in the electronic device, or the external server of the electronic device.

According to an embodiment of the present disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include the electronic device (e.g., electronic device 100 according to the disclosed embodiments. If the instruction is executed by the processor, the processor may directly perform a function corresponding to the instruction or other components may perform the function corresponding to the instruction under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored on the storage medium.

In addition, according to an embodiment of the present disclosure, the methods according to the various embodiments described above may be included and provided in a computer program product. The computer program product may be traded as a commodity between a seller and a purchaser. The computer program product may be distributed in a form of the machine-readable storage medium (for example, a compact disc read only memory (CD-ROM)), or may be distributed online through an application store (for example, PlayStore^{™}. In case of the online distribution, at least a portion of the computer program product may be at least temporarily stored or temporarily generated on a storage medium such as the memory of a manufacturer server, an application store server, or a relay server.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device comprising:
memory storing at least one instruction; and
at least one processor connected to the memory and configured to control the electronic device,
wherein the at least one processor is configured to
based on receiving an input image, identify an image-processing domain corresponding to an image quality processing network required for image quality processing of an input image from among a plurality of image-processing domains,
identify, based on the identified image-processing domain, at least one unit calculation module to be used for each of a plurality of layers included in the image quality processing network from among a plurality of unit calculation modules,
implement a floating-type image quality processing network by controlling first layer information to be input into the identified at least one unit calculation module corresponding to a first layer among the plurality of layers, and inputting an output of the first layer into the identified at least one unit calculation module corresponding to a second layer among the plurality of layers, and
process the input image using the implemented floating-type image quality processing network, and
wherein each of the plurality of image-processing domains corresponds to a different image resolution.

2. The electronic device of claim 1, wherein the plurality of unit calculation modules are included in a calculation module comprising different types of operators for convolution calculation, and
wherein the electronic device further comprises a convolution bank in which the plurality of unit calculation modules are collected based on a domain position in at least one image quality processing network, and
the at least one processor is configured to implement the floating-type image quality processing network by identifying the at least one unit calculation module to be used for each of the plurality of layers included in the image quality processing network from among the plurality of unit calculation modules included in the convolution bank.

3. The electronic device of claim 2, wherein the at least one processor is configured to based on the image quality processing network being identified as being positioned in a first domain corresponding to a first resolution based on the input image, identify, based on scheduling information, at least one first unit calculation module to be used for each of the plurality of layers corresponding to the image quality processing network having the first resolution, from among the plurality of unit calculation modules included in the convolution bank, and
based on the image quality processing network being identified as being positioned in a second domain corresponding to a second resolution based on the input image, identify, based on the scheduling information, at least one second unit calculation module to be used for each of the plurality of layers corresponding to the image quality processing network having the second resolution from among the plurality of unit calculation modules included in the convolution bank.

4. The electronic device of claim 1 or 2, wherein the memory stores scheduling information in which the plurality of unit calculation modules to be used for each layer of the image-processing domain are scheduled, and
the at least one processor is configured to
based on the image-processing domain corresponding to the image quality processing network being identified, implement the floating-type image quality processing network by identifying the at least one unit calculation module to be used for each of the plurality of layers included in the image quality processing network based on the scheduling information stored in the memory.

5. The electronic device of claim 1, wherein the at least one the at least one processor is configured to
identify the image-processing domain corresponding to the image quality processing network, from among the plurality of image-processing domains, based on at least one of resolution information of the input image or characteristic information of the input image.

6. The electronic device of claim 1 or 2, wherein the plurality of layers included in the image quality processing network comprises a head layer, a core layer, and a tail layer,
wherein, based on the image quality processing network is positioned in a first domain, the image quality processing network comprises a first head layer, a first core layer, and a first tail layer, wherein, based on the image quality processing network is positioned in a second domain, the image quality processing network comprises a second head layer, a second core layer, and a second tail layer,
wherein the first head layer and the first tail layer are layers trained to correspond to the first domain,
wherein the second head layer and the second tail layer are layers trained to correspond to the second domain, and
wherein the first core layer and the second core layer are common layers trained to be commonly used in the first domain and the second domain.

7. The electronic device of claim 6, wherein the image quality processing network is configured to perform using the image quality processing network, input shuffling in front of the head layer and output shuffling behind the tail layer,
wherein the input shuffling reduces a resolution of the input image and increases a number of channels, and
wherein the output shuffling increases the resolution of the input image and reduces the number of channels.

8. The electronic device of claim 7, wherein the image quality network is configured to perform the input shuffling at least one time to enable image data input into the core layer to have a predetermined first resolution pre-trained by the core layer, and
perform the output shuffling at least one time to enable image data output from the image quality processing network to have a predetermined second resolution, and
wherein the predetermined first resolution and the predetermined second resolution are the same or different based on a type of the image quality processing network.

9. The electronic device of claim 8, wherein the at least one processor is configured to apply network pruning to at least one core layer among a plurality of core layers included in the image quality processing network, and
maintain an amount of convolution calculations based on the domain position in the image quality processing network by assigning calculations removed by the network pruning to at least one of the head layer or the tail layer.

10. The electronic device of claim 1 or 2, wherein the image quality processing network comprises at least one of a super-resolution processing network, a sharpness processing network, a texture processing network, or an edge processing network.

11. An image-processing method for an electronic device, the method comprising:
based on receiving an input image, identifying an image-processing domain corresponding to an image quality processing network required for image quality processing of an input image from among a plurality of image-processing domains;
identifying, based on the identified image-processing domain, at least one unit calculation module to be used for each of a plurality of layers included in the image quality processing network from among a plurality of unit calculation modules;
implementing a floating-type image quality processing network by controlling first layer information to be input into the identified at least one unit calculation module corresponding to a first layer among the plurality of layers, and inputting an output of the first layer into the identified at least one unit calculation module corresponding to a second layer among the plurality of layers; and
processing the input image using the implemented floating-type image quality processing network, wherein each of the plurality of image-processing domains corresponds to a different image resolution.

12. The method of claim 11, wherein the plurality of unit calculation modules are included in a calculation module comprising different types of operators for convolution calculation, and
wherein the electronic device comprises a convolution bank in which the plurality of unit calculation modules are collected based on a domain position in at least one image quality processing network, and
the implementing of the floating-type image quality processing network includes implementing the floating-type image quality processing network by identifying the at least one unit calculation module to be used for each of the plurality of layers included in the image quality processing network from among the plurality of unit calculation modules included in the convolution bank.

13. The method of claim 12, wherein the identifying the at least one unit calculation module comprises:
based on the image quality processing network being identified as being positioned in a first domain corresponding to a first resolution based on the input image, identifying, based on scheduling information, at least one first unit calculation module to be used for each of the plurality of layers corresponding to the image quality processing network having the first resolution from among the plurality of unit calculation modules included in the convolution bank, and
based on the image quality processing network being identified as being positioned in a second domain corresponding to a second resolution based on the input image, identify, based on the scheduling information, identifying, based on the scheduling information, at least one second unit calculation module to be used for each of the plurality of layers corresponding to the image quality processing network having the second resolution from among the plurality of unit calculation modules included in the convolution bank.

14. The method of claim 11 or 12, wherein the identifying the at least one unit calculation module comprises:
based on the image-processing domain corresponding to the image quality processing network being identified, identifying the at least one unit calculation module to be used for each of the plurality of layers included in the image quality processing network based on scheduling information in which the plurality of unit calculation modules to be used for each layer of the image-processing domain are scheduled.

15. A non-transitory computer-readable medium storing a computer instruction that causes an electronic device to perform an operation if executed by a processor of the electronic device, wherein the operation includes
based on receiving an input image, identifying an image-processing domain corresponding to an image quality processing network required for image quality processing of an input image from among a plurality of image-processing domains;
identifying, based on the identified image-processing domain, at least one unit calculation module to be used for each of a plurality of layers included in the image quality processing network from among a plurality of unit calculation modules;
implementing a floating-type image quality processing network by controlling first layer information to be input into the identified at least one unit calculation module corresponding to a first layer among the plurality of layers, and inputting an output of the first layer into the identified at least one unit calculation module corresponding to a second layer among the plurality of layers; and
processing the input image using the implemented floating-type image quality processing network, wherein each of the plurality of image-processing domains corresponds to a different image resolution.
